# EUROPÄISCHE PATENTSCHRIFT

(11) **EP 0 703 025 B1**
(45) Veröffentlichungstag und Bekanntmachung des Hinweises auf die Patenterteilung: **24.02.1999**
(21) Anmeldenummer: 95108960.6
(22) Anmeldetag: 10.06.1995
(51) Int. Cl.: B21K 27/02, B23D 17/02, B21K 27/06

(54) **Vorrichtung zum Abscheren von Stangenabschnitten**
Device for shearing bar sections
Dispositif de cisaillage des sections de barres

(30) Priorität: 18.06.1994 DE 4421382
(43) Veröffentlichungstag der Anmeldung: 27.03.1996
(73) Patentinhaber: SCHULER PRESSEN GmbH & Co., 73033 Göppingen (DE)
(72) Erfinder: Braun, Rainer, D-73033 Göppingen (DE)

(56) Entgegenhaltungen:
- DE-A- 1 502 934
- DE-B- 2 526 151
- DE-C- 163 994

## Beschreibung

Die Erfindung betrifft eine Vorrichtung der im Oberbegriff des Anspruchs 1 angegebenen Art.

Vorrichtungen zum Abscheren von Stangenabschnitten sind oftmals Teil von Stufen-bzw. Mehrstufenpressen. Der Scherzyklus ist in den Gesamtablauf der Presse integriert.

Aus der DE-C2-29 46 718 ist eine Abschereinrichtung für Drahtabschnitte in einer Umformpresse bekannt mit einem hin- und hergehenden Messerschlitten mit daran befestigtem Schermesser. Das Schermesser wirkt beim Schervorgang mit einem stillstehenden Gegenmesser zusammen. Der Messerschlitten ist mit einem Dreiarmhebel verbunden, dessen einer Arm über eine Verbindungslasche an dem Messerschlitten angelenkt ist und dessen beide andere Arme über Rollen auf Kurvenscheiben abrollen. Die Kurvenscheiben sind auf einer Welle angeordnet und komplementär ausgebildet für die zwangsgeführte Scher- und Rückholbewegung.

Desweiteren ist aus der DE-B2-25 26 151 eine Vorrichtung zum Abscheren von Stangenabschnitten in einer Umformpresse bekannt mit einem Messerschlitten mit Schermesser und ortsfestem Schermesser. Der Antrieb des Messerschlittens erfolgt in Scherrichtung durch einen dem Messerschlitten gegenüber frei beweglichen, mit Wucht auf den Messerschlitten auftreffenden Schlagkopf Die Rückkehr des Messerschlittens in die dem Schlagkopf benachbarte Ausgangsstellung erfolgt vermittels Federspeicher. Der Schlagkopf ist am Ende eines kurvengesteuerten Schlaghebels angeordnet. Die Bewegung des Schlaghebels ist derart kurvengesteuert, daß der Schlagkopf und der mit diesem nach dem Abscheren zurückkehrende Messerschlitten geringe Geschwindigkeiten besitzen..

Bei beiden genannten Druckschriften ist das Schermesser mit dem Messerschlitten starr verbunden. Der ungesteuerte, federspeicherbewirkte Rücklauf des Schermessers nach der DE-B2-25 26 151 führt zu Rückprallwirkungen, die die Scherfolge und den nachfolgenden Schervorgang nicht unwesentlich beeinflussen.

Die Aufgabe der Erfindung kann darin gesehen werden, das Schermesser beim Scheren unabhängig vom Rückführantrieb zu bewegen. Das Schermesser wird dabei jedoch immer gegen einen Federspeicher gedrückt gehalten, um eine definierte Bewegung des Schermessers zu erhalten.

Diese Aufgabe ist gelöst durch die Merkmale des Anspruchs 1. Die Merkmale der weiteren Ansprüche stellen hierbei bevorzugte Ausführungen der Erfindung dar.

Von besonderen Vorteilen hierbei sind die Trennung von Abschereinrichtung und Rückführeinrichtung und der Trennung von Schermesser und Scherstange für einen erleichterten Schermesserwechsel, der geringen zu beschleunigenden Masse für den Schervorgang beim Auftreffen der Scherstange auf das Schermesser und der Vermeidung großer Belastung der Rückführeinrichtung. In der unteren Umkehrlage nach dem Scheren ist eine Rast für das Schermesser vorgesehen zum Ausstoßen des abgescherten Drahtabschnittes aus dem Schermesser.

Anhand eines Ausführungsbeispiels in der Zeichnung soll im folgenden die Erfindung näher erläutert werden.

Dabei zeigen:
- Fig. 1: die Abschereinrichtung in einem nur teilweise dargestellten Rahmengestell,
- Fig. 2: einen Schnitt entsprechend dem Schnittverlauf II-II in Fig. 1 oder Fig. 3,
- Fig. 3: die Rückführeinrichtung in dem Rahmengestell,
- Fig. 4: eine Draufsicht auf die Fign. 1, 2 und 3,
- Fig. 5: eine schematische Darstellung der Vorrichtung nach der Erfindung,
- Fign. 6a bis 6d: schematisch die Abfolge von Abscherbewegung und Rückführbewegung und
- Fig. 7: ein Ablaufdiagramm des Scherzyklusses.

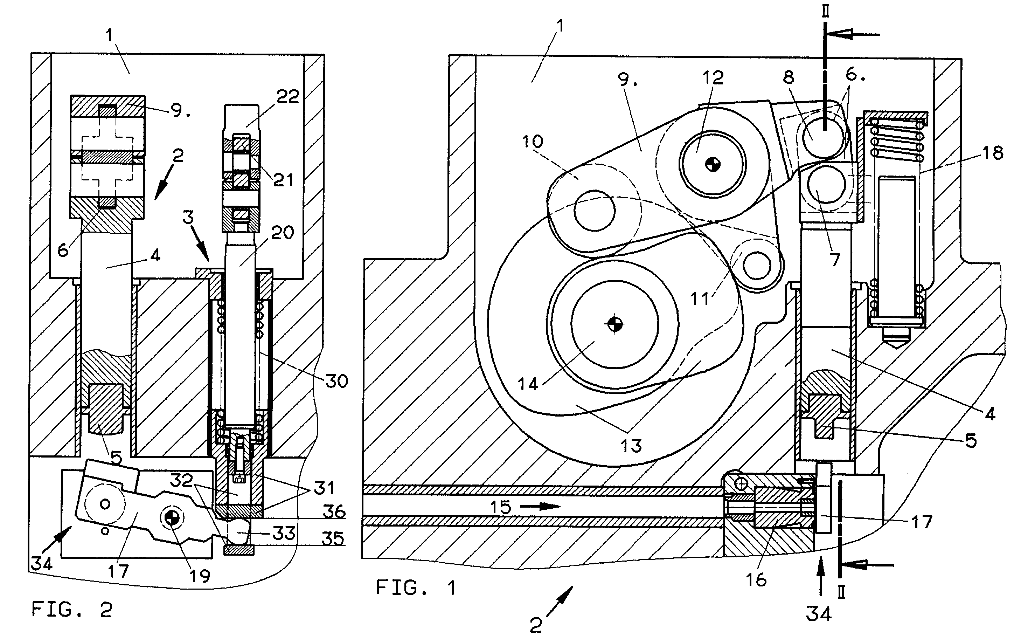

In den Fign. 1, 2, 3 und 4 ist ein Rahmengestell, beispielsweise ein Pressenrahmen einer Mehrstufenpresse mit 1 positioniert. Der Pressenrahmen 1 ist nur in dem Bereich dargestellt, in dem das Abscheren von Drahtabschnitten erfolgt. Fig. 1 zeigt den Teil des Pressenrahmens 1 mit einer insgesamt mit 2 positionierten Abschereinrichtung. Die Abschereinrichtung 2 umfaßt eine getriebene Welle 14, auf der für den Abschervorgang eine Doppelkurve 13 aufgekeilt ist. In einem Drehlager 12 ist ein Doppelrollenhebel 9 schwenkbar gelagert, der dreiarmig ausgeführt ist, mit in einem ersten Arm und in einem zweiten Arm mit jeweils einer Rolle 10, bzw. 11 an der Doppelkurve 13 formschlüssig anliegt und der in dem dritten Arm durch eine erste Lasche 6 an einer Scherstange 4 angelenkt ist. Mit 7 und 8 sind Schwenklager positioniert zur Lagerung der ersten Lasche 6 an Doppelrollenhebel 9 und Scherstange 4. Die Drahtzufuhr erfolgt durch die Bohrung 15 über den Bereich der gestellfesten Scherbuchse 16 hinaus für eine vorbestimmbare Drahtlänge. Die Scherstange 4 ist über eine Feder 8, hier eine Druckfeder, zur Vermeidung von Toleranzlose und Spielumkehr mit dem Rahmengestell 1 verbunden. Mit 17 ist ein Schermesser positioniert, das von der Scherstange 4 bei Drehung der Doppelkurve 13 über einen mit dieser mitgeführten Schlagklotz 5 von oben mit Bezug auf Fig. 1 beaufschlagbar ist.

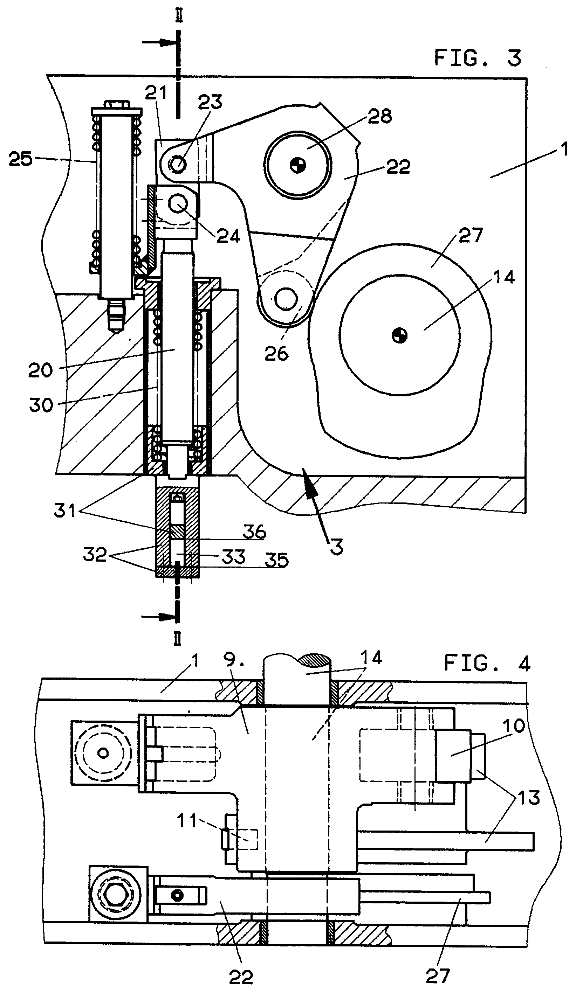

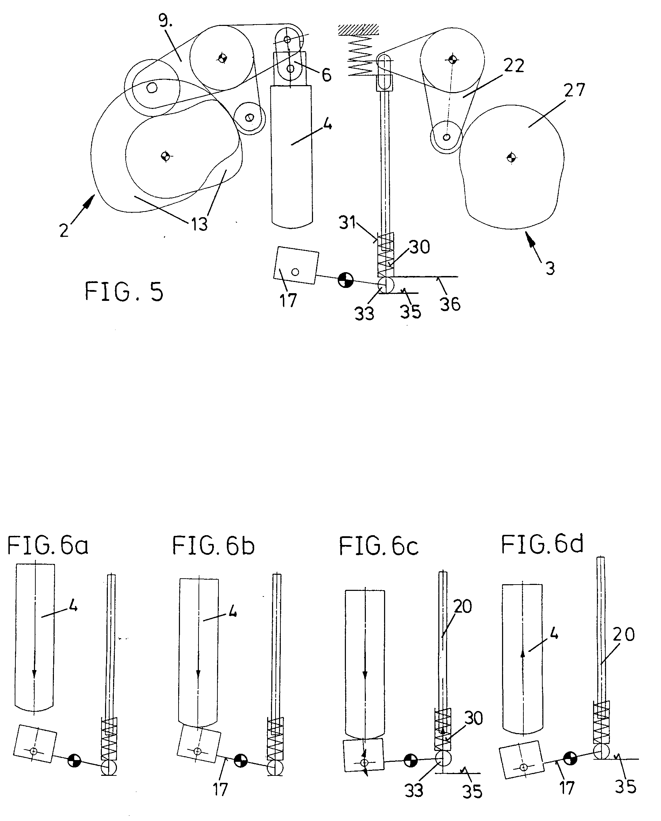

Fig. 3 zeigt den Teil des Pressenrahmens 1, in dem der Rückführantrieb 3 eingebaut ist. Mit 14 ist die Welle zur starren Aufnahme der Rückholerkurve 27 angedeutet, wobei die Welle 14 der in Fig. 1 gezeigten Welle 14 entsprechen kann. In einem Drehlager 28 ist ein Doppelarmhebel 22 schwenkbar gelagert, der in einem Arm mit einer Rolle 26 an der Rückholerkurve 27 vermittels gestellseitiger Feder 25, hier einer Druckfeder, kraftschlüssig anliegt. Der Doppelarmhebel 22 ist in dem zweiten Arm durch eine zweite Lasche 21 an eine Rückführstange 20 angelenkt. Die Schwenkbarkeit der zweiten Lasche 21 erfolgt über Drehlager 23 bzw. 24. Die Rückführstange 20 führt eine Druckfeder 30, die sich mit ihrem oberen Ende gestellseitig abstützt, die sich anderenends in einer Aufnahmebuchse 31 abstützt. Die Aufnahmebuchse 31 ist in dem Rahmengestell 1 und auf der Rückführstange 20 verschieblich gelagert. Die Aufnahmebuchse 31 ist zumindest teilweise längsgeschlitzt zur Aufnahme einer Gegenanlage 32. Die Gegenanlage 32 ist an der Rückführstange 20 befestigt und bildet eine Gegenanlagefläche 35. Das in Fig. 2 näher erkennbare Schermesser 17 ist zwischen der Gegenanlagefläche 35 an der Gegenanlage 32 und einer Anlagefläche 36 an der Aufnahmebuchse 31 gehalten. Bedeutung und Funktionen der Anlagen werden zu den Fign. 6a bis 6d noch beschrieben.

Fig. 2 als Schnitt II-II in den Fign. 1 und 3 zeigt die zu diesen Figuren beschriebenen Bauteile mit Pressenrahmen 1, Scherstange 4, Schlagklotz 5, Schermesser 17, Rückführstange 20, Aufnahmebuchse 31 und Gegenanlage 32. Kennziffer 34 verweist in den Fign. 1 und 2 auf den Scherbereich; mit 33 ist die besondere Ausgestaltungsform des Schermessers 17 in Art eines Wälzkopfes zwischen Gegenanlagefläche 35 an der mit der Rückführstange 20 mitgeführten Gegenanlage 32 und Anlagefläche 36 an der Aufnahmebuchse 31 beziffert.

Fig. 4 zeigt aus den Fign. 1 bis 3 bekannte Bauteile von oben (Draufsicht). In dem Rahmengestell 1 sind Lagerstellen für die Welle 14 erkennbar. Antriebsmittel für die Welle 14 sind nicht dargestellt, da diese aus Motor und Getriebe bestehen und von daher bekannte Elemente und Anordnungen erwarten lassen. Der nicht im Schnitt dargestellte Doppelrollenhebel 9 trägt an zwei Armen je eine Rolle 10 bzw. 11, die an der Doppelkurve 13 anliegen. Der Einfachrollenhebel 22 verdeckt den Kurvenabgriff von der Rückholerkurve 27. Das in Fig. 3 gezeigte Drehlager 28 wurde aus Gründen besserer Erkennbarkeit der weiteren Teile nicht gezeigt.

Die schematische Darstellung der Fig. 5 läßt die Bauteile von Abschereinrichtung 2 und Rückführantrieb 3 in ihrem Zusammenwirken erkennen. Für nicht wesentlich für die Erläuterung der Funktion erachtete Bauteile wurden fortgelassen, zumal diese Bauteile zuvor zu den Fign. 1 bis 4 erläutert wurden. Für gleiche Bauteile wurden gleiche Kennziffern, wie in den zuvor beschriebenen Figuren, verwendet.

Die Fign. 6a bis 6d sind in Anlehnung an Fig. 5 entstanden und sollen der Darstellung des Zusammenspiels von Scherstange 4, Schermesser 17 und Rückführstange 20 dienen.

Der (gesamte) Scherzyklus läßt sich für den Scherbetrieb in die Phasen Beschleunigung der Scherstange, Scheren des Drahtes und Rückhub der Scherstange, für den Rückführbetrieb in die Phasen Nachführen der Rückführstange 20 und Rückführen des Schermessers 17 unterteilen. Die aus dem Stillstand (Fig. 6a) bewegte Scherstange 4 trifft am Ende der Beschleunigungsphase mit max. Geschwindigkeit auf das Schermesser 17, Fig. 6b. Es kommt hierbei direkt zum Abschervorgang. Der Gleitwälzkopf 33 hebt von der Gegenanlagefläche 35 ab (Fig. 6c), während die Rückführstange 20 noch in ihrer Stellung verharrt. Die Feder 30 wird hierbei gespannt. Mit der Rückführung der Rückführstange 20 (Fig. 6d) kommt erneut die Gegenanlagefläche 35 zur Anlage an dem Gleitwälzkopf 33, und das Schermesser 17 wird zunächst noch in einer Lage gehalten, in der der abgescherte Drahtabschnitt entnommen werden kann.

Die Scherstange 4 ist gesteuert in die Ausgangslage zurückgeführt. Die Rückführung des Schermessers 17 in die Position, in der das Zuführen des Drahtendes durch die Scherbuchse 16 (Fig. 1), in das Schermesser 17 erfolgen kann, wird durch eine entsprechende Auslegung der Kurve an der Rückholerkurve 27 bewirkt. Befindet sich das Schermesser 17 in der unteren Umkehrlage, erfolgt zunächst eine Rast. Mit dem Abwärtsbewegen der Rückführstange 20 wird auch die Gegenanlagefläche 35 abwärts bewegt, so daß das Schermesser 17 infolge gleichzeitigen Entspannens der Feder 30 in die in Fig. 6a gezeigte Ausgangslage geführt wird.

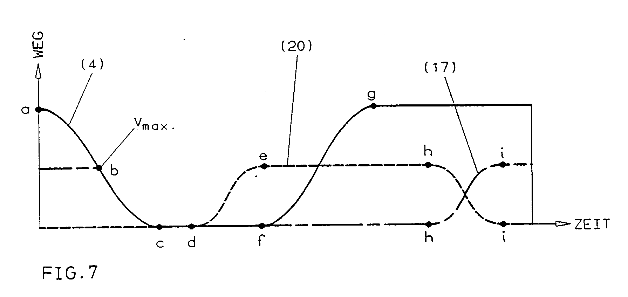

In dem Weg/Zeit-Diagramm in Fig. 7 ist der Bewegungsablauf der Scherstange 4 mit (4), der Bewegungsablauf der Rückführstange 20 mit (20) und des Schermessers 17 mit (17) eingezeichnet. Die eingezeichneten Punkte kennzeichnen:
a den Beginn des Niedergangs der Scherstange 4,
b den Zeitpunkt des Auftreffens der Scherstange 4 auf das Schermesser 17 bei max. Geschwindigkeit der Scherstange 4,
   mit dem Kurvenverlauf zwischen b und c den gemeinsamen Niedergang von Scherstange 4 und Schermesser 17 mit Schervorgang,
c den unteren Hubpunkt von Scherstange 4 und Schermesser 17 nach dem Schervorgang,
d den Beginn des Hochlaufs der Rückführstange 20 bis zum Punkt e,
f den Beginn des Hochlaufs der Scherstange 4 bis zum Punkt g,
h den Beginn des Niedergangs der Rückführstange 20 und des Hochlaufs des Schermessers 17 bis Punkt i.

Punkt c bis Punkt h beinhaltet den Zeitraum einer Rast des Schermessers 17 zum Auswerfen des abgeschnittenen Drahtstückes.

## Patentansprüche

1. Vorrichtung zum Abscheren von stangenabschnitten mit vermittels Kurvenfolgerhebeln (9, 22) von Kurvenscheiben (13, 27) abgegriffener Scherbewegung und Rückführbewegung für das Schermesser (17), mit einer auf das Schermesser (17) wirkenden Scherstange (4), die an dem Kurvenfolgerhebel (9) des Scherantriebs angelenkt ist**, dadurch gekennzeichnet,** daß die Rückführeinrichtung (3) für das Schermesser (17) eine Rückführstange (20) aufweist, die mit einem Ende an dem Kurvenfolgerhebel (22) für den Rückführantrieb gelenkig angeschlossen ist, daß das Schermesser (17) als zweiarmiger Hebel ausgebildet ist, an dessen einem ersten Ende der Scherbereich (34) vorgesehen ist und dessen anderes zweites Ende mit der Rückführstange (20) zusammenwirkt, daß zwischen dem Rahmengestell (1) und dem zweiten Ende des Schermessers (17) eine Feder (30) ausgespannt ist zum Vorspannen des zweiten Endes des Schermessers (17) entgegen der Scherbewegung, und daß die Rückführstange (20) eine Gegenanlage (32) aufweist, wobei das Schermesser (17) mit dem zweiten Ende zwischen der federnden Anlage der Feder (30) und der Gegenanlage (32) gehalten ist.

2. Vorrichtung nach Anspruch 1, **dadurch gekennzeichnet,** daß zwischen dem Kurvenfolgerhebel (9) des Scherantriebs und der Scherstange (4) eine erste Lasche (6) angeordnet ist.

3. Vorrichtung nach Anspruch 1, **dadurch gekennzeichnet,** daß die Scherstange (4) über ein Federelement (18) entgegen der Scherwirkung federnd vorgespannt ist zur Vermeidung von Spielumkehr zwischen der Scherstange (4), erster Lasche (6) und Kurvenfolgerhebel (9) während des Scherzyklusses.

4. Vorrichtung nach Anspruch 1, **dadurch gekennzeichnet,** daß über den gegen das zweite Ende des Schermessers (17) gerichteten Endbereich der Rückführstange (20) zumindest teilweise eine geschlitzte Aufnahmebuchse (31) geschoben ist und zwischen der Aufnahmebuchse (31) und dem Pressenrahmen (1) eine Druckfeder (30) ausgespannt ist zur federnden Anlage der Aufnahmebuchse (31) an dem zweiten Ende des Schermessers (17) entgegen der Scherbewegung.

5. Vorrichtung nach einem oder mehreren der Ansprüche 1, 2, 3 oder 4, **dadurch gekennzeichnet,** daß die Abschereinrichtung (2) einen formschlüssigen Kurventrieb, im besonderen mit einem Doppelrollenhebel (9) aufweist, der über die erste Lasche (6) an die Scherstange (4) angeschlossen ist.

6. Vorrichtung nach einem oder mehreren der Ansprüche 1, 2, 3, 4, oder 5, **dadurch gekennzeichnet,** daß die Rückführeinrichtung (3) ein kraftschlüssiges Kurvengetriebe mit Einfachrollenhebel (22) aufweist, der über die zweite Lasche (21) an die Rückführstange (20) angeschlossen ist.

7. Vorrichtung nach Anspruch 1, **dadurch gekennzeichnet,** daß das zweite Ende des Schermessers (17) als Gleitwälzkopf (33) ausgebildet ist.

## Claims

1. Device for shearing off bar sections, with a shearing movement and return movement, which are measured by means of cam follower levers (9, 22) of cam discs (13, 27), for the shearing blade (17), having a shearing rod (4) which acts on the shearing blade (17) and is articulated to the cam follower lever (9) of the shearing drive, characterized in that the return device (3) for the shearing blade (17) has a return rod (20), one end of which is articulately connected to the cam follower lever (22) for the return drive, in that the shearing blade (17) is designed as a two-armed lever, at a first end of which the shearing area (34) is provided and the other, second end of which interacts with the return rod (20), in that a spring (30) is positioned with stress between the frame (1) and the second end of the shearing blade (17), in order to prestress the second end of the shearing blade (17) in the opposite direction to the shearing movement, and in that the return rod (20) has a mating stop (32), the second end of the shearing blade (17) being held between the resilient stop provided by the spring (30) and the mating stop (32).

2. Device according to Claim 1, characterized in that a first bracket (6) is arranged between the cam follower lever (9) of the shearing drive and the shearing rod (4).

3. Device according to Claim 1, characterized in that the shearing rod (4) is resiliently prestressed, in the opposite direction to the shearing action, by means of a spring element (18), in order to avoid a reversal of play between the shearing rod (4), first bracket (6) and cam follower lever (9) during the shearing cycle.

4. Device according to Claim 1, characterized in that a slotted receiving sleeve (31) is pushed at least partially over that end region of the return rod (20) which faces towards the second end of the shearing blade (17), and a compression spring (30) is positioned with stress between the receiving sleeve (31) and the press frame (1), so that the receiving sleeve (31) bears resiliently against the second end of the shearing blade (17), in the opposite direction to the shearing movement.

5. Device according to one or more of Claims 1, 2, 3 or 4, characterized in that the shearing device (2) has a form-fitting cam drive, in particular with a double-roll lever (9), which is connected, via the first bracket (6), to the shearing rod (4).

6. Device according to one or more of Claims 1, 2, 3, 4 or 5, characterized in that the return device (3) has a force-fitting cam mechanism with a single-roll lever (22) which, via the second bracket (21), is connected to the return rod (20).

7. Device according to Claim 1, characterized in that the second end of the shearing blade (17) is designed as a sliding roller head (33).

## Revendications

1. Dispositif pour le cisaillement de tronçons de barres par mouvements de cisaillement et de retour mesurés par des leviers commandés par came (9, 22) sur des disques à cames (13, 27) pour la lame de cisaillement (17), avec une barre de cisaillement (4) agissant sur la lame de cisaillement (17) et articulée sur le lever commandé par came (9) de l'entraînement du cisaillement, **caractérisé en ce que** le dispositif de retour (3) pour la lame de cisaillement (17) comporte une barre de retour (20) qui est articulée par une de ses extrémités sur le levier commandé par came (22) pour l'entraînement du retour, en ce que la lame de cisaillement (17) est conçue comme levier à deux bras, à une première extrémité duquel est prévue la zone de cisaillement (34) et dont la deuxième extrémité concourt avec la barre de retour (20), en ce qu'entre le bâti (1) et la deuxième extrémité de la lame de cisaillement (17), un ressort (30) est débandé pour la précontrainte de la deuxième extrémité de la lame de cisaillement (17) en opposition au mouvement du cisaillement, et en ce que la barre de retour (20) comporte une contre-butée (32), la lame de cisaillement (17) étant maintenue par la deuxième extrémité entre la surface d'appui élastique du ressort (30) et la contre-butée (32).

2. Dispositif selon la revendication 1, **caractérisé en ce** qu'entre le levier commandé par came (9) de l'entraînement du cisaillement et la lame de cisaillement (4) est agencée une première éclisse (6).

3. Dispositif selon la revendication 1, **caractérisé en ce que** la barre de cisaillement (4) est précontrainte par un élément ressort (18) dans le sens opposé à l'effet de cisaillement afin d'éviter un renversement de jeu entre la barre de cisaillement (4), la première éclisse (6) et le levier commandé par came (9) en cours du cycle de cisaillement.

4. Dispositif selon la revendication 1, **caractérisé en ce** qu'au dessus de la zone d'extrémité de la barre de retour (20) dirigée contre la deuxième extrémité de la lame de cisaillement (17) est insérée une douille de réception (31) au moins partiellement fendue, et en ce qu'un ressort à pression (30) est relâché entre la douille de réception (31) et le bâti de la presse (1) pour assurer le contact élastique de la douille de réception (31) sur la deuxième extrémité de la lame de cisaillement (17) dans le sens opposé au mouvement de cisaillement.

5. Dispositif selon une ou plusieurs des revendications 1, 2, 3 ou 4, **caractérisé en ce que** le dispositif de cisaillement (2) présente un entraînement à came, notamment avec un lever double à galets (9) qui est relié par la première éclisse (6) à la barre de cisaillement (4).

6. Dispositif selon une ou plusieurs des revendications 1, 2, 3, 4 ou 5, **caractérisé en ce que** le dispositif de retour (3) comporte une commande à cames commandé par ressort avec lever simple à galet (22) qui est relié par la deuxième éclisse (21) à la barre de retour (20).

7. Dispositif selon la revendication 1, **caractérisé en ce que** la deuxième extrémité de la lame de cisaillement (17) est conçue comme tête roulante (33).
